# EUROPÄISCHE PATENTANMELDUNG

(11) **EP 0 933 566 A1**
(43) Veröffentlichungstag der Anmeldung: **04.08.1999**
(21) Anmeldenummer: 98810077.2
(22) Anmeldetag: 02.02.1998
(51) Int. Cl.: F16J 15/10, C09K 3/10, F16J 9/28

(54) **Dichtungselemente für trockenlaufende Kolbenkompressoren**

(71) Anmelder: Maschinenfabrik Sulzer-Burckhardt AG, 4002 Basel (CH)
(72) Erfinder: Feistel, Norbert, 8408 Winterthur (CH)
(74) Vertreter: Sulzer Management AG

(57) **Zusammenfassung**

Ein Dichtungselement für einen trockenlaufenden Kolbenkompressor, insbesondere für einen trockenlaufenden Sauerstoffkompressor, enthält Perfluoralkoxy-Copolymer.

## Beschreibung

Die Erfindung betrifft Dichtungselemente für trockenlaufende Kolbenkompressoren, insbesondere trockenlaufende Sauerstoffkompressoren.

Trockenlaufende Kolbenkompressoren sind Kompressoren, die im Verdichtungsteil ohne Fremdschmiermittel, wie beispielsweise Schmieröl, arbeiten. Der Kompressionsraum muss dabei gegenüber seiner Umgebung möglichst gut abgedichtet werden, um ein unerwünschtes bzw. unkontrolliertes Ausströmen des zu komprimierenden Mediums zu verhindern oder zumindest auf ein Minimum zu reduzieren. Kritische Stellen bezüglich der Abdichtung sind insbesondere der Bereich zwischen der äusseren Wand des Kolbens und der inneren Wandung des Zylinders, in dem sich der Kolben im Betrieb bewegt, der Bereich der Durchführung der Kolbenstange in den Zylinderinnenraum sowie die dichtenden Komponenten der Ein- und Auslassventile (Saug- und Druckventile), durch welche das zu komprimierende Medium in den Kompressionsraum eingebracht wird bzw. das komprimierte Medium aus diesem ausgestossen wird.

Mit der Bezeichnung "Dichtungselement" sind alle solchen Elemente gemeint, die eine dichtende Funktion bezüglich des Kompressionsraums ausüben, also insbesondere Führungsringe und Kolbenringe zur Kolbendichtung, Dicht- oder Drosselringe zur Abdichtung der Kolbenstange und dichtende Ventilkomponenten, wie Ventilplatten, Ventilringe oder Poppets.

Insbesondere bei trockenlaufenden Kompressoren unterliegen solche Dichtungselemente enorm hohen mechanischen und thermischen Beanspruchungen. Da beispielsweise die Abdichtung des Kolbens oder der Kolbenstange auf trockener Reibung zwischen den Gegenlaufpartnern basiert, kann die Temperatur im Kompressionsraum je nach mittlerer Kolbengeschwindigkeit und abzudichtender Druckdifferenz stark ansteigen. Neben guten tribologischen Eigenschaften müssen solche Dichtungselemente ihre dichtenden Eigenschaften auch unter hohen Temperaturen und bei hohen Druckdifferenzen behalten. Auch die dichtenden Ventilkomponenten müssen trotz starker Wechselbeanspruchungen und oft hoher Temperaturen einwandfrei funktionieren, um einen guten Wirkungsgrad bei trockenlaufenden Kompressoren zu erzielen.

Insbesondere zur Abdichtung des Kolbens und der Kolbenstange in trockenlaufenden Kolbenkompressoren werden Dichtungselemente heute häufig aus Kunststoff, beispielsweise aus gefüllten Polymeren bzw. Hochtemperaturpolymeren hergestellt. Als Polymermaterial wird beispielsweise Polytetrafluorethylen (PTFE), Polyetheretherketon (PEEK) Polymid (PI) oder Polyamidimid (PAI) verwendet. Diese Polymere werden üblicherweise mit Füllstoffen wie Kohlenstoff, Grafit, Glasfasern, Metalle, Keramik oder Festschmierstoffe vermischt und in dieser Form als gefüllte Polymere bezeichnet.

Speziell bei der Verdichtung von Sauerstoff mittels trockenlaufender Kompressoren ergeben sich aber bezüglich der Materialien für die Dichtungselemente ganz besondere Probleme aufgrund der hohen Reaktivität des Sauerstoffs, vor allem wenn er in komprimierter Form vorliegt und dazu noch hohe Temperaturen herrschen. Hier besteht eine äusserst grosse Gefahr der Entstehung von Kompressorbränden, die im Vergleich zur Verdichtung anderer Gase deutlich verheerendere Folgen haben. Die Anwesenheit von reinem Sauerstoff in komprimierter Form führt zu kaum noch löschbaren Bränden, die somit in der Regel zur vollständigen Zerstörung des Sauerstoffkompressors führen. Zudem besteht auch ein erhebliches Risiko für das Bedienpersonal.

Aus diesen Gründen werden für Sauerstoffkompressoren enorm hohe Anforderungen an ihre Betriebssicherheit gestellt. Es hat sich gezeigt, dass die meisten der bekannten Polymere bzw. Hochtemperaturpolymere, die zwar bei der Verdichtung anderer Gase erfolgreich eingesetzt werden, für die Herstellung von Dichtungselementen für trockenlaufende Sauerstoffkompressoren nicht geeignet sind, weil sie den hohen Sicherheitsanforderungen nicht genügen. Von den üblicherweise in trockenlaufenden Kompressoren als Dichtungsmaterial verwendeten Polymeren hat sich bisher nur PTFE als "sauerstofftauglich" erwiesen. Andere Hochtemperaturpolymere wie beispielsweise PEEK sind nicht geeignet und werden daher aus Sicherheitsgründen für Sauerstoffkompressoren nicht verwendet.

Dichtungselemente aus PTFE oder gefülltem PTFE haben jedoch andere Nachteile. So hat PTFE eine ausgeprägte Kriechneigung (hoher Kaltfluss), sodass hierdurch die erreichbaren Differenzdrücke stark beschränkt werden. Hohe Differenzdrücke führen zum Fliessen des Dichtungselements, beispielsweise des Kolbenrings, wodurch die Dichtwirkung so schlecht wird, dass unvertretbar hohe Leckraten auftreten. Deshalb können trockenlaufende Sauerstoffkompressoren heutzutage im Vergleich zu anderen Gaskompressoren nur bei relativ geringen Differenzdrücken betrieben werden. Dies ist jedoch im Hinblick auf einen effizienten und wirtschaftlichen Betrieb bei hohem Wirkungsgrad nicht befriedigend.

Es ist daher eine Aufgabe der Erfindung, Dichtungselemente für trockenlaufende Kolbenkompressoren, insbesondere für trockenlaufende Sauerstoffkompressoren bereitzustellen, die einen effizienten Betrieb des Kompressors auch bei hohen Differenzdrücken ermöglichen. Im speziellen sollen die Dichtungselemente den hohen Sicherheitsanforderungen für die trockenlaufende Verdichtung von Sauerstoff genügen.

Das diese Aufgaben lösende Dichtungselement ist durch die Merkmale des unabhängigen Anspruchs 1 gekennzeichnet.

Mit Dichtungselementen, die Perfluoralkoxy-Copolymer (PFA) enthalten, können in trockenlaufenden Kolbenkompressoren auch hohe Differenzdrücke effizient abgedichtet werden. Unerwartet und überraschend ist insbesondere, dass sich gezeigt hat, dass solche erfindungsgemässen Dichtungselemente auch den hohen Sicherheitsanforderungen genügen, die an Dichtungselemente für trockenlaufende Sauerstoffkompressoren gestellt werden. Die mechanischen, thermischen, tribologischen und chemischen Eigenschaften der erfindungsgemässen Dichtungselemente ermöglichen eine deutliche Leistungssteigerung, insbesondere höhere Differenzdrücke, in trockenlaufenden Sauerstoffkompressoren im Vergleich zu solchen Sauerstoffkompressoren, die bekannte Dichtungselemente enthalten, ohne dass dafür Zugeständnisse an die Betriebssicherheit vonnöten sind.

Die erfindungsgemässen Dichtungselemente haben zudem den Vorteil, dass sie auch mittels Spritzgiessverfahren herstellbar sind.

Bevorzugt enthalten die erfindungsgemässen Dichtungselemente ferner Füllstoffe wie Kohlepulver, Graphit, Bronze, Kupfer Molybdändisulfit und/oder faserförmige Stoffe wie Kohlefasern, Aramidfasern, Glasfasern und/oder Glaskugeln. Durch solche Füllstoffe lassen sich z. B. die tribologischen Eigenschaften verbessern, die Warmfestigkeit steigern und der Kaltfluss praktisch auf Null reduzieren.

Das erfindungsgemässe Dichtelement ist vorzugsweise als Kolbenring oder Führungsring für den Kolben, als Dicht- oder Drosselring zur Abdichtung der Kolbenstange oder als dichtende Ventilkomponente, insbesondere als Ventilkörper, eines Ventils des Kolbenkompressors ausgestaltet.

Im folgenden wird die Erfindung anhand von Ausführungsbeispielen und anhand der Zeichnung näher erläutert. In der schematischen, nicht massstäblichen Zeichnung zeigen:
- Fig. 1:: Die wesentlichen Teile eines trockenlaufenden Kolbenkompressors (Kolben teilweise mit Ausbruch),
- Fig. 2:: die Kolbenstangendichtung eines trockenlaufenden Kolbenkompressors,
- Fig. 3: eine Explosionsdarstellung eines Plattenventils mit erfindungsgemäsen Dichtungselementen,
- Fig. 4:: eine schematische Schnittdarstellung eines Ringventils, und
- Fig. 5:: eine Darstellung eines Poppetventils (teilweise mit Ausbruch).

Die erfindungsgemässen Dichtungselemente für trockenlaufende Kolbenkompressoren sind dadurch gekennzeichnet, dass sie Perfluoralkoxy-Copolymer (PFA) enthalten. Mit dem Begriff "Dichtungselemente" sind dabei solche Elemente gemeint, die zur Abdichtung des Kompressionsraums beitragen, also zum Beispiel Kolbenringe, Führungsringe, Dicht- oder Drosselringe zur Kolbenstangenabdichtung sowie dichtende Ventilkomponenten der Saug- und Druckventile.

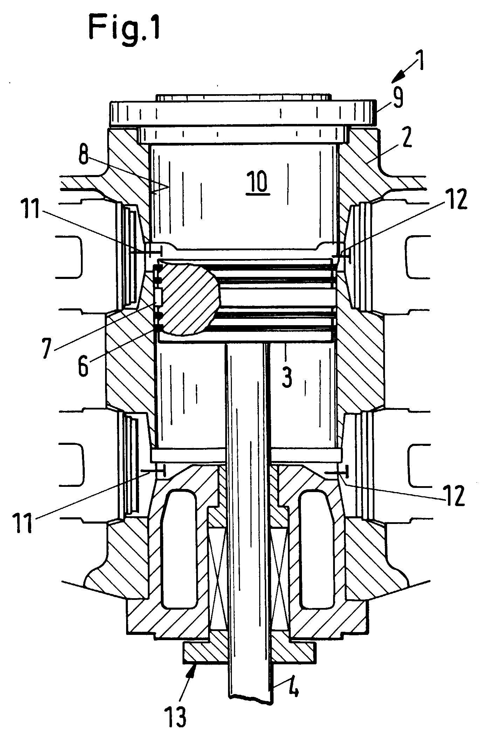

Zum besseren Verständnis zeigt Fig. 1 die wesentlichen Teile eines trockenlaufenden Kolbenkompressors, insbesondere eines Sauerstoffkompressors, der gesamthaft mit dem Bezugszeichen 1 versehen ist. Der Kolbenkompressor 1 weist einen Zylinder 2 auf, dessen Innenraum in axialer Richtung von einem Zylinderdeckel 9 abgeschlossen wird. Im Innern des Zylinders ist ein Kolben 3 hin- und herbeweglich angeordnet. Das darstellungsgemäss untere Ende des Kolbens 3 geht in eine Kolbenstange 4 über, die von nicht dargestellten Antriebsmitteln, beispielsweise über einen Kreuzkopf, angetrieben wird. Zwischen dem darstellungsgemäss oberen Ende des Kolbens 3 und dem Zylinderdeckel 9 befindet sich ein Kompressionsraum 10. In an sich bekannter Weise wird bei einer Abwärtsbewegung (bezüglich der Darstellung in Fig. 1) der zu verdichtende Sauerstoff durch ein Einlass- oder Saugventil 11 in den Kompressionsraum 10 eingesaugt und bei der anschliessenden Aufwärtsbewegung verdichtet und über ein Auslass- oder Druckventil 12 aus dem Kompressionsraum 10 ausgestossen. Das Saugventil 11 und das Druckventil 12, sind in Fig. 1 symbolisch dargestellt. Das Saugventil 11 und das Druckventil 12 können, wie in Fig. 1 gezeigt, als jeweils separate, das heisst körperlich voneinander getrennte Ventile, ausgestaltet sein oder aber auch in Form einer baulichen Einheit als Saug/Druckventil.

Falls der Kompressor 1 als doppelwirkender Kompressor ausgestaltet ist, befindet sich im Innern des Zylinders 2 gemäss der Darstellung in Fig. 1 unterhalb des Kolbens ein weiterer Kompressionsraum, für den dann auch zusätzlich Saug- und Druckventile 11, 12 vorgesehen sind.

Der Durchtritt der Kolbenstange 4 in den Innenraum des Zylinders ist mit einer Kolbenstangendichtung 13, einer sogenannten Packung, abgedichtet, die später näher erläutert wird.

Am Kolben 3 sind in an sich bekannter Weise Kolbenringe 6 sowie gegebenenfalls mindestens ein Führungsring 7 vorgesehen, die im Betriebszustand an der inneren Wandung 8 des Zylinders 2 entlang reiben, und den hochdruckseitigen Kompressionsraum 10 entlang des Kolbens 3 gegen die Niederdruckseite abdichten sowie die Führung des Kolbens 3 gewährleisten. Diese Art der Dichtung beruht auf trockener Reibung zwischen den Gegenlaufpartnern. Die Kolbenringe 6 können natürlich auch als sogenannte gefangene Kolbenringe zwischen Kammerringen am Kolben 3 angeordnet sein.

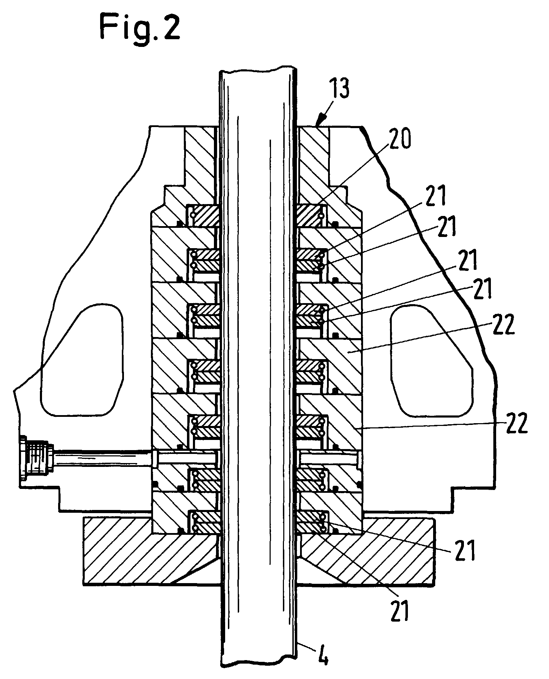

Fig. 2 zeigt eine detaillierter Darstellung der Kolbenstangendichtung 13, die als Packung ausgestaltet ist. Die Kolbenstangendichtung 13 umfasst mindestens einen Drosselring 20 sowie mehrere Dichtringe 21, die zwischen Kammerringen 22 angeordnet sind. Bei der in Fig. 2 dargestellten Ausführungsform sind die Dichtringe 21 jeweils paarweise zwischen den Kammerringen 22 angeordnet, das heisst, zwischen zwei benachbarten Kammerringen 22 befinden sich jeweils zwei aneinanderliegende Dichtringe 21.

Der Führungsring 7, die Kolbenringe 6, der Drosselring 20, die Dichtringe 21 sowie weiter hinten noch näher erläuterte Ventilkomponenten der Saug- und Druckventile 11, 12 sind jeweils Ausgestaltungen des erfindungsgemässen Dichtungselements. Diese Dichtungselemente 6,7,11,12 enthalten PFA. Besonders bevorzugt ist das PFA mit Füllstoffen wie Kohlepulver, Graphit, Bronze, Kupfer, Molybdändisulfit und/oder faserförmige Stoffe wie Kohlefasern, Aramidfasern, Glasfasern und/oder Glaskugeln vermischt. Der Füllstoffanteil beträgt dabei z. B. etwa 30%-35%. Es hat sich unerwarteterweise gezeigt, dass Dichtungselemente 6,7,20,21 aus solchem gefüllten PFA den hohen Sicherheitsanforderungen genügt, die an Dichtungselemente für trockenlaufende Sauerstoffkompressoren gestellt werden. Aufgrund der hohen Chemikalienbeständigkeit, des fehlenden Kaltflusses, der hohen Festigkeit, insbesondere Warmfestigkeit, sowie der guten tribologischen Eigenschaften von gefülltem PFA lassen sich mit den erfindungsgemässen Dichtungselementen 6.7.20,21 trockenlaufende Kolbenkompressoren zur Sauerstoffverdichtung herstellen, die mit wesentlich höheren Differenzdrücken, beispielsweise bis zu 250 bar, betreibbar sind als dies mit bekannten Dichtungselementen im Trockenlauf möglich ist. Besonders vorteilhaft ist dabei, dass diese deutliche Steigerung der Leistungsfähigkeit und Effizienz erreichbar ist, ohne dass dafür Zugeständnisse bezüglich der Betriebssicherheit bei der Sauerstoffverdichtung vonnöten sind.

Ein weiterer Vorteil der erfindungsgemässen Dichtungselemente 6,7,20,21, insbesondere unter fertigungstechnischen Aspekten, ist darin zu sehen, dass sie auch im Spritzgiessverfahren herstellbar sind. Natürlich ist die Herstellung alternativ auch mittels konventionellem mechanischen Herausarbeiten aus Halbzeugen möglich.

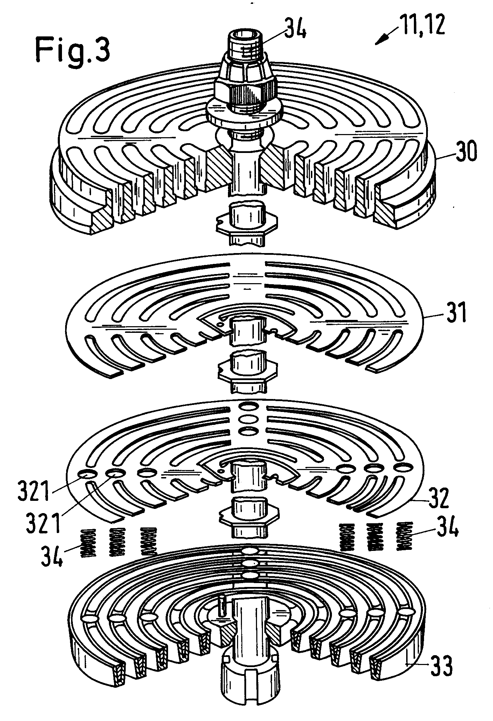

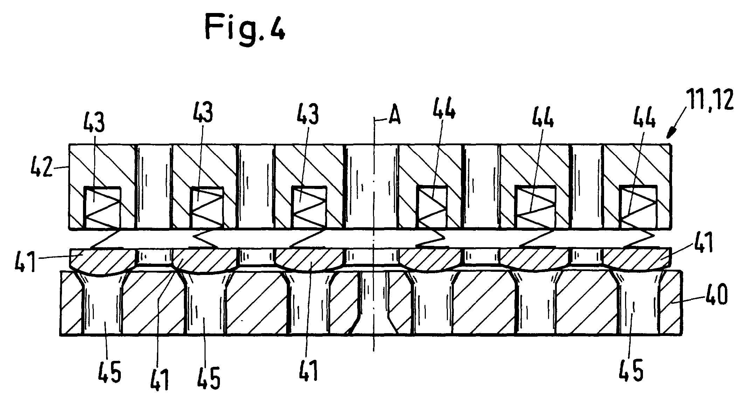

In den Fig. 3,4,5 sind einige bevorzugte Arten der Ausgestaltung von Saug- und Druckventilen 11,12 dargestellt, die Ventilkomponenten bzw. Ventilkörper enthalten, die Ausgestaltungen des erfindungsgemässen Dichtungselements darstellen. Dabei ist es insbesondere bei den in Fig. 3 und 4 dargestellten Ausgestaltungen in an sich bekannter Weise möglich, dass ein einziges Ventil sowohl die Funktion des Saug- 11 als auch des Druckventils 12 ausübt, das heisst, dass das Saug- 11 und das Druckventil eine bauliche Einheit bilden. In den Fig. 3,4 und 5 sind die Ventile jeweils gesamthaft mit den Bezugszeichen 11,12 bezeichnet, um anzudeuten, dass sie sowohl als Saugventil 11 als auch als Druckventil 12 dienen können.

Fig. 3 zeigt in einer Explosionszeichnung ein Plattenventil 11,12 mit einem Ventilsitz 30, einer Ventilplatte 31, einer Dämpferplatte 32 und einem Fänger 33. Diese Teile werden von einer Zentralschraube 34 zusammengehalten. Die Dämpferplatte 32 weist Öffnungen 321 auf zum Durchtritt von Federn 34, welche zwischen dem Fänger 33 und der Ventilplatte 31 wirkend angeordnet sind. Die Ventilplatte 31 und die Dämpferplatte 32, die im Betrieb den höchsten Wechselbeanspruchungen unterliegen, sind Ausgestaltungen des erfindungsgemässen Dichtungselements.

Fig. 4 zeigt in einer Schnittdarstellung ein Ringventil 11,12 mit einem Ventilsitz 40, der Durchlassöffnungen 45 aufweist, mit mehreren konzentrisch zur Achse A des Ringventils 11,12 angeordneten Ringen 41, die hier die dichtenden Ventilkomponenten darstellen, sowie mit einem Fänger 42. In dem Fänger 42 sind Ausnehmungen 43 vorgesehen, in denen Federn 44 angeordnet sind, welche die Ringe 41 gegen die Durchlassöffnungen 45 drücken. Die Ringe 41 sind Ausgestaltungen des erfindungsgemässen Dichtungselements.

Ebenfalls bevorzugt können erfindungsgemässe Dichtungselemente auch als Dichtkörper von Kanalventilen ausgestaltet sein. Kanalventile sind Ringventilen sehr ähnlich, jedoch sind bei Kanalventilen die Durchlassöffnungen im Ventilsitz nicht als konzentrische ring- oder ringsegmentförmige Öffnungen ausgestaltet sondern als gerade Kanäle. Dementsprechend sind beim Kanalventil als dichtende Ventilkomponenten keine Ringe vorgesehen sondern mehrere streifenförmige Dichtkörper, die durch Federelemente, beispielsweise Blattfedern, dichtend gegen die als Durchlassöffnungen dienenden Kanäle vorgespannt sind.

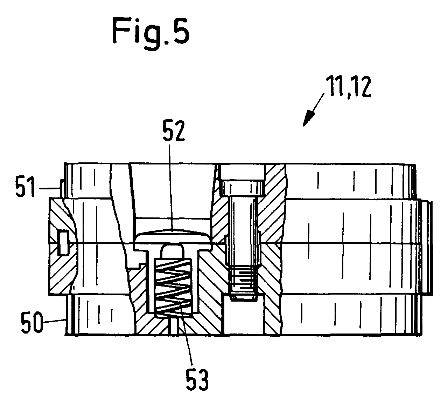

Fig. 5 zeigt, teilweise mit Ausbruch, ein sogenanntes Poppetventil mit einem Gehäuse, das ein erstes Gehäuseteil 50 und ein zweites Gehäuseteil 51 umfasst, sowie mit einem im wesentlichen pilzförmigen Ventilkörper 52, dem sogenannten Poppet, der in einer entsprechend ausgestalteten Bohrung angeordnet ist, welche sich durch beide Gehäuseteile 50,51 erstreckt. Zwischen dem ersten Gehäuseteil 50 und dem Ventilkörper 52 wirkt eine Feder 53. Es können auch mehrere Ventilkörper 52 in einem Gehäuse angeordnet sein. Die Ventilkörper 41 sind Ausgestaltungen des erfindungsgemässen Dichtungselements.

Wird das erfindungsgemässe Dichtungselement als Kolbenring 6 (Fig. 1), Führungsring 7, Drosselring 20 (Fig. 2) oder Dichtring 21 ausgestaltet, so eignen sich hierfür, je nach Anwendung, sowohl einteilige als auch mehrteilige Ausgestaltungen (geschnittene Ringe).

## Patentansprüche

1. Dichtungselement für einen trockenlaufenden Kolbenkompressor, insbesondere für einen trockenlaufenden Sauerstoffkompressor, dadurch gekennzeichnet, dass es Perfluoralkoxy-Copolymer enthält.

2. Dichtungselement nach Anspruch 1, welches ferner Füllstoffe wie Kohlepulver, Graphit, Bronze, Kupfer Molybdändisulfit und/oder faserförmige Stoffe wie Kohlefasern, Aramidfasern, Glasfasern und/oder Glaskugeln enthält.

3. Dichtungselement nach einem der vorangehenden Ansprüche, ausgestaltet als Kolbenring (6) oder Führungsring (7) für den Kolben (3) des Kolbenkompressors (1)

4. Dichtungselement nach einem der Ansprüche 1-2, ausgestaltet als Dicht- (21) oder Drosselring (22) zur Abdichtung der Kolbenstange (4) des Kolbenkompressors (1).

5. Dichtungselement nach einem der Ansprüche 1-2, ausgestaltet als dichtende Ventilkomponente (31, 32; 41; 52) eines Ventils (11, 12) des Kolbenkompressors (1).

6. Verwendung von Perfluoralkoxy-Copolymer zur Herstellung von Dichtungselementen (6, 7, 20, 21, 31, 32; 41; 42) für trockenlaufende Kolbenkompressoren (1), insbesondere trockenlaufende Sauerstoffkompressoren.

7. Trockenlaufender Kolbenkompressor, insbesondere trockenlaufender Sauerstoffkompressor, mit einem Dichtungselement gemäss einem der Ansprüche 1-6.
